Europäisches Patentamt

(19) European Patent Office (11) Publication number: **0 186 630**
Office européen des brevets **B1**

(12) **EUROPEAN PATENT SPECIFICATION**

(45) Date of publication of the patent specification: (51) Int. Cl.⁴: **A01F 12/44**
13.09.89

(21) Application number: 85830267.2

(22) Date of filing: 28.10.85

(54) Improvements in combine harvesters.

(30) Priority: 24.12.84 IT 5422484 U

(43) Date of publication of application:
02.07.86 Bulletin 86/27

(45) Publication of the grant of the patent:
13.09.89 Bulletin 89/37

(84) Designated Contracting States:
DE FR GB IT

(56) References cited:
EP-A- 0 144 291
FR-A- 1 227 210
FR-A- 1 564 176
FR-A- 2 267 694
FR-A- 2 315 841
US-A- 4 051 856
US-A- 4 270 551
US-A- 4 401 128
US-A- 4 441 512

(73) Proprietor: FIATGEOTECH - TECNOLOGIE PER LA
TERRA S.p.A., Viale delle Nazioni, 55,
I-41100 Modena(IT)

(72) Inventor: Raineri, Giuseppe, Via Bellini 20/22,
I-36061 Bassano Del Grappa Vicenza(IT)

(74) Representative: Notaro, Giancarlo et al, c/o
Jacobacci-Casetta & Perani S.p.A. Via Alfieri, 17,
I-10121 Torino(IT)

ACTORUM AG

## Description

The present invention relates to combine harvesters of the conventional type consisting of a thresher unit, including a threshing cylinder having its axis arranged transversely to the longitudinal axis of the harvester and a thresher concave in the form of a concave grille surrounding the lower part of the threshing cylinder and defining therewith a passage for traversal by the crop harvested by the harvester in a direction parallel to the longitudinal axis of the harvester, a cleaning unit including a pivoted bin carrying at least two cleaning screens located one above the other, conveyor means for receiving a flow of separated grain transversely distributed over the entire width of the machine from the thresher unit and for advancing said transversely distributed flow of grain towards the rear of the machine up to a discharge end from which it falls onto the cleaning unit, and means for directing a current of air at the product dropping on to the cleaning unit, so as to separate the lighter chaff from the grain.

The basic problem of the present invention is that of improving the pneumatic separation of the lighter chaff from the grain in order to reduce the work load on the cleaning sieves so that they can be made smaller.

The main characteristic of the invention lies in the fact that the combine harvester further includes a transverse accelerator roller to accelerate the fall of the transversely distributed flow of product, coming from the discharge end of said conveyor means, said accelerator roller being located immediately adjacent to the discharge end of the conveyor means without the interposition of any means for further distributing the product over the width of the machine, and a fixed wall adjacent the accelerator roller, and defining therewith a passage through which the grain leaving the conveyor means is accelerated, the wall being so as to incline the fall of product accelerated by the accelerator roller relative to a vertical transverse plane. Preferably the said wall surrounds the rear part (with reference to the direction of travel of the combine harvester) of the accelerator roller in such a manner as to divert the fall of product forwardly on to the cleaning unit.

By virtue of the said characteristics, the pneumatic action of separating the lighter chaff from the grain is considerably improved, both because the product is accelerated by the accelerator roller, and also because the discharge of the product on to the cleaning unit is inclined to a vertical transverse plane, whereby the space traversed by the product under the action of the air current is greater than when the product falls vertically on to the cleaning screens.

From FR-A 1 564 176, a combine harvester of the type given in the first paragraph of the present description is known; this prior art teaches the use of an accelerator roller cooperating with an adjacent fixed wall, but the product accelerated by these means falls vertically.

The Applicant, in Italian Patent Application 68256-A/83 corresponding to the European Patent Application EP-A 0 144 291, both not yet published at the priority date of this Application, has also proposed a combine harvester provided with an accelerator roller located above the cleaning unit, and a wall cooperating with the accelerator roller for diverting the fall of product which, in this said application, falls on to the cleaning unit relative to a transverse vertical plane.

The combine harvester proposed above, however, is of the so-called "axial flow" type, that is, it is provided with a thresher unit in which the product describes a helical trajectory around the threshing cylinder, moving from one end of the latter to the other. The product separated by the thresher unit is then conveyed and off-loaded on to a pair of transverse counter-rotating screw distributors (in this specification and in the following claims, the term "transverse" refers to a direction perpendicular to the longitudinal vertical plane of the combine harvester), located above the accelerator roller and arranged to distribute the product received from the thresher unit over the whole width of the harvester.

In the present invention, the use, in combination with the accelerator roller, of a wall for diverting the fall of accelerated product has been applied to a combine harvester of the conventional type in which the product passes through the thresher unit in a longitudinal direction, in a plane perpendicular to the axis of the threshing cylinder.

In this case the conveyor means which receive the separated grain from the thresher unit and drop it on to the accelerator roller may, for example, be constituted by a screw or a belt conveyor, and the use of the distributor screws illustrated in the prior (not pre-published) Patent Application is no longer necessary, in as much as the grain emerging from the conventional thresher unit is already distributed over the entire width of the machine.

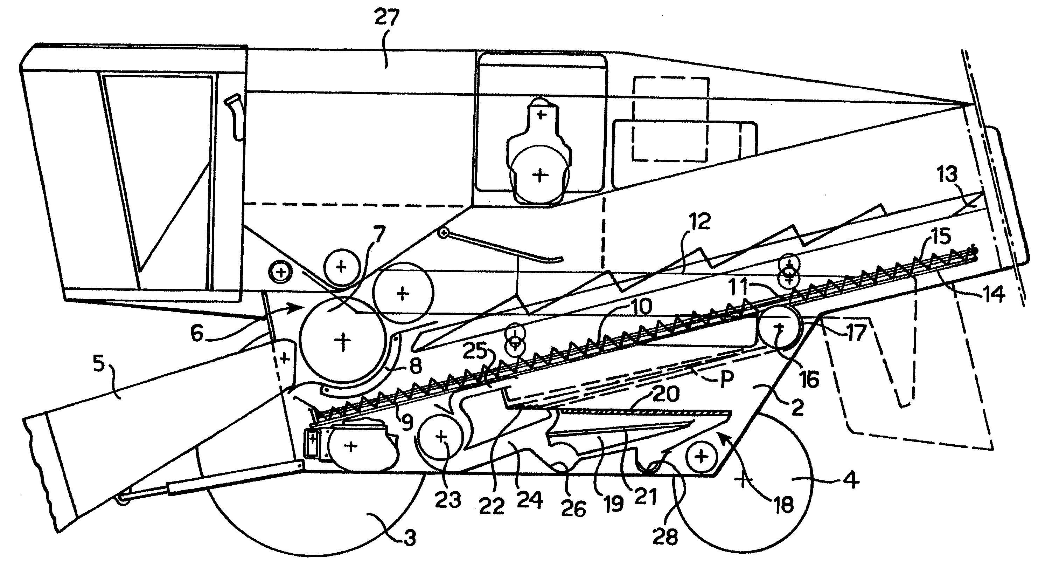

Further characteristics and advantages of the invention will emerge from the description which follows with reference to the appended drawing, provided purely by way of non-limiting example, which is a diagrammatic longitudinal-sectional view of a combine harvester according to the invention.

The Figure illustrates a combine harvester 1 which has a fixed structure 2 mounted on front wheels 3 and rear wheels 4. The combine harvester is provided at its front end with a cutting platform 5 (only partially illustrated in the drawing) and a conventional thresher unit 6, including a threshing cylinder 7 with a transverse axis and a thresher concave 8 in the form of a concave grille, surrounding the lower part of the threshing cylinder 7. The passage defined between the threshing cylinder 7 and the concave 8 is designed to be traversed by the harvested crop in a direction parallel to the longitudinal axis of the combine harvester.

The grain separated by the thresher unit 6 which falls beneath the thresher concave 8 is collected on a flat surface 9 extending towards the rear of the combine harvester. Above the surface 9 is a series of screw conveyors 10 (only one of which is visible in the drawing) arranged parallel to a longitudinal vertical plane through the combine harvester and arranged to convey the grain which falls beneath the thresher concave 8 to a discharge opening 11. The material which trasverses the passage between the concave 8 and the threshing cylinder 7 without falling beneath the concave 8 is discharged on to a shaking screen assembly 12 of conventional type, which pushes the straw towards an unloading end 13. The grain recovered by the shaking screen assembly falls on to the surface 9, where it is taken up by the screw conveyors 10 and carried to the discharge opening 11, or else on to a surface 14 arranged as an extension of the surface 9 beyond the unloading opening 11. Above the surface 14 there are further screw conveyors 15, driven by the same shafts as the screws 10, and so arranged as to propel the grain which falls on to the surface 14 towards the discharge opening 11.

Below the discharge opening 11 is an accelerator roller 16 for accelerating the fall of the product leaving the discharge opening 11.

The structure of the accelerator roller 16 is not illustrated in the drawings in that it is known _per se_. Moreover, the elimination of these constructional details from the drawings renders the latter more immediately comprehensible. For example, the accelerator roller can be shaped in the manner described in the European Patent Application No. 0 073 179 by the same Applicant, which illustrates a combine harvester of the axial-flow type in which the product which falls on to the cleaning unit is projected in a vertical direction by an accelerator roller.

Reference numeral 17 indicates a fixed transverse wall having a cross-section in the form of an arc of a circle, surrounding the rear part (in relation to the direction of travel of the combine harvester) of the cylinder of the accelerator roller 16, so as to divert the fall of product accelerated by the said roller 16 into a plane inclined forwardly of a vertical transverse plane. In the drawing, the reference P indicates the fall of accelerated product. The product emerging from the accelerator roller falls on to a cleaning unit 18 of the conventional kind comprising a pivoted bin 19 bearing a pair of superposed cleaning screens 20, 21. The pivoted bin 19 has a table 22 located forwardly of the upper screen 20, in the area towards which the fall P of product accelerated by the roller 16 is directed. Reference numeral 23 indicates a fan for directing a jet of air through pipes 24, 25 opening into the zone of the cleaning screens 20, 21 and into the zone to which the fall P of product accelerated by the roller 16 is directed, respectively.

Below the cleaning screens 20, 21 are a collector 26, in which the grain is collected, and from which it is transferred to a tank 27 of the combine harvester, by a conveyor device of known type (not illustrated) and a collector 28 for the material to be subjected to further separation. The material collected in the collector 28 is passed back into the cycle by conveyor means of a tipe known _per se_ (not illustrated), to be subjected to cleaning again.

In operation, the product leaving the discharge opening 11 is accelerated by the roller 16 in passing through the passage defined between this roller and the wall 17. The latter deflects the fall of accelerated product into a forwardly-inclined fall, as illustrated in the drawing.

The fall of deflected and accelerated product is invested by a current of air from the pipe 25, whereby the lighter chaff is separated from the heavier grain and deposited on the ground behind the combine harvester. The material which falls on to the table 22, which is part of the pivoted bin 19, is transferred to the cleaning screens 20, 21 where it is invested by the current of air from the pipe 24, which provides for further separation. The grain which reaches the collector 26 is conveyed to the tank 27 of the combine harvester, whilst the material which reaches the collector 28 is recycled to be cleaned again.

By virtue of the fact that the accelerated fall of product is inclined to a vertical transverse plane, the space traversed by the product under the action of the current of air is increased, thereby enhancing the pneumatic separation. The cleaning unit 18 can therefore be made smaller, in that its work load is reduced.

A device can be provided immediately below the accelerator roller for diverting the fall of product accelerated by the accelerator roller 16 towards the higher side of the combine harvester when the latter is inclined to one side; such a device may, for example, be of the type constituting the object of the previous Italian Patent Application 68257-A/83 by this Applicant as well as the corresponding European Patent Application No. 84830200.6 (EP-A 0 144 292) filed on the 29th June 1984 by the same Applicant.

## Claims

1 . A combine harvester, comprising
– a thresher unit (6), including a threshing cylinder (7) having its axis arranged transversely to the longitudinal axis of the harvester and a thresher concave (8) in the form of a concave grille surrounding the lower part of the threshing cylinder (7) and defining therewith a passage for traversal by the crop harvested by the harvester in a direction parallel to the longitudinal axis of the machine,
– a cleaning unit (18) including a pivoted bin (19) bearing at least two cleaning screens (20, 21) one above the other,
– conveyor means (10) for receiving a flow of separated grain transversely distributed over the entire width of the machine from the thresher unit (6) and for advancing said transversely distributed flow of grain towards the rear of the machine up to a discharge end from which it falls onto the cleaning unit (18),
– means (23, 25) for directing a current of air at the product (P) which falls on to the cleaning unit (18) so as to separate the lighter chaff from the grain, characterised in that the combine harvester further includes
– a transverse accelerator roller (16) to accelerate the fall of the transversely distributed flow of product coming from the discharge end of said conveyor means (10), said accelerator roller (16) being located immediately adjacent to the discharge end of the conveyor means (10) without the interposition of any means for further distributing the product over the width of the machine, and

– a fixed wall (17) adjacent the accelerator roller (16) and defining therewith a passage through which the grain leaving the conveyor means (10) is accelerated, the fixed wall (17) being so as to incline the fall of the product (P) accelerated by the accelerator roller (16) relative to a vertical transverse plane.

2. Combine harvester according to Claim 1 characterised in that the said fixed wall (17) surrounds the rear part (in relation to the direction of travel of the combine harvester) of the accelerator roller (16) so as to incline the fall of accelerated product P forwardly.

3. Combine harvester according to Claim 1, characterised in that the said conveyor means include a flat surface located beneath the thresher unit (6) and extending beyond the latter towards the rear of the combine harvester, and a series of screw conveyors (10) located immediately above the flat surface and extending parallel to a longitudinal vertical plane through the combine harvester for transporting the grain which falls beneath the thresher concave (8) towards a discharge opening (11) located above the accelerator roller (16).

4. Combine harvester according to Claim 3, characterised in that it includes a shaking screen assembly (12) spaced above the said flat surface (9) and arranged to receive the straw leaving the thresher unit (6) and to carry it towards an unloading end (13) of the shaking screen assembly (12), and in that the combine harvester further includes an additional flat surface (14) located as an extension of the said flat surface (9) beyond the discharge opening (11), and a series of screw conveyors (15) situated above the additional flat surface (14) for carrying the grain which falls on to the additional flat surface (14) of the shaking screen assembly (12) to the aforesaid unloading opening (11).

**Patentansprüche**

1. Mähdrescher mit einer Dreschereinheit (6), welche einen Dreschzylinder (7) umfaßt, dessen Achse quer zu der Längsachse des Mähdreschers angeordnet ist, sowie eine Drescher-Hohlfläche (8) in der Form eines konkaven Rostes, die den unteren Teil des Dreschzylinders (7) umgibt und mit diesem eine Passage zum Durchlauf des durch den Mähdrescher geernteten Erntegutes in einer zur Längsachse der Maschine parallelen Richtung definiert, ferner mit einer Reinigungseinheit (18), welche einen Schwenkbehälter (19) umfaßt, der wenigstens zwei Reinigungssiebe (20, 21) übereinander trägt, einer Fördereinrichtung (10) zum Aufnehmen eines Stromes von getrenntem Korn, das quer über die gesamte Breite der Maschine verteilt ist, von der Dreschereinheit (6) und zur Zustellung des quer verteilten Kornstromes zu dem hinteren Teil der Maschine bis zu einem Abgabeende, von welchem es auf die Reinigungseinheit (18) fällt, einer Einrichtung (23, 25), die dazu dient, einen Luftstrom auf das Produkt (P) zu richten, welches auf die Reinigungseinheit (18) fällt, um auf diese Weise die leichtere Spreu von dem Korn zu trennen, gekennzeichnet durch eine Quer-Beschleunigungswalze (16) zur Beschleunigung des Falls des quer verteilten Produktstromes, der von dem Abgabeende der Fördereinrichtung (10) kommt, wobei die Beschleunigungswalze (16) unmittelbar benachbart dem Abgabeende der Fördereinrichtung (10) gelegen ist ohne die Zwischenschaltung einer Einrichtung zur weiteren Verteilung des Produktes über die Breite der Maschine, sowie eine feststehende Wand (17), welche der Beschleunigungswalze (16) benachbart ist und mit dieser eine Passage bestimmt, durch welche das Korn beschleunigt wird, das die Fördereinrichtung (10) verläßt, wobei die feststehende Wand (17) derart ist, daß sie den Fall des durch die Beschleunigungswalze (16) beschleunigten Produkts (P) relativ zu einer vertikalen Querebene neigt.

2. Mähdrescher nach Anspruch 1, dadurch gekennzeichnet, daß die feststehende Wand (17) den hinteren Teil (in Beziehung zur Bewegungsrichtung des Mähdreschers) der Beschleunigungswalze (16) so umgibt, daß sie den Fall des beschleunigten Produkts (P) nach vorn neigt.

3. Mähdrescher nach Anspruch 1, dadurch gekennzeichnet, daß die Fördereinrichtung eine plane Fläche umfaßt, die unterhalb der Dreschereinheit (6) gelegen ist und sich unterhalb dieser zu dem hinteren Teil des Mähdreschers erstreckt, sowie Reihe von Schneckenförderern (10), die unmittelbar oberhalb der planen Fläche gelegen sind und sich parallel zu einer vertikalen Längsebene durch den Mähdrescher erstrecken, um das Korn, welches unter die Drescher-Hohlfläche (8) fällt, zu einer Abgabeöffnung (11) zu fördern, die oberhalb der Beschleunigungswalze (16) gelegen ist.

4. Mähdrescher nach Anspruch 3, gekennzeichnet durch eine Schüttelsiebanordnung (12), die über der planen Fläche (9) angeordnet ist und dafür vorgesehen ist, das Stroh, welches die Dreschereinheit (6) verläßt, zu einem Entladeende (13) der Schüttelsiebanordnung (12) zu bringen, und durch eine zusätzliche plane Fläche (14), die als Verlängerung der planen Fläche (9) jenseits der Abgabeöffnung (11) angeordnet ist, sowie eine Reihe von Schneckenförderern (15), die über der zusätzlichen planen Fläche (14) angeordnet sind, um das Korn, welches auf die zusätzliche plane Fläche (14) der Schüttelsiebanordnung (12) fällt, zu der Abgabeöffnung (11) zu bringen.

**Revendications**

1. Moissonneuse-batteuse, comprenant:
– une unité batteuse (6) comprenant un cylindre batteur (7) ayant son axe disposé transversalement à l'axe longitudinal de la moissonneuse et une contreplaque de batteur concave (8), sous la forme d'une grille concave qui entoure la partie inférieure du cylindre batteur (7) et définit avec ce dernier un passage qui est parcouru par la récolte moissonnée par la moissonneuse dans une direction parallèle à l'axe longitudinal de la moissonneuse;
– une unité de nettoyage (18) comprenant une trémie oscillante (19) portant au moins deux tamis nettoyeurs (20, 21) disposés l'un au-dessus de l'autre;

— des moyens transporteurs (10) destinés à recevoir un flux de grain séparé qui est réparti transversalement sur toute la largeur de la machine, à la sortie de l'unité batteuse (6), et à faire progresser ce flux de grain réparti transversalement vers l'arrière de la machine jusqu'à une extrémité de sortie, d'où il tombe sur l'unité de nettoyage (18);

— des moyens (23, 25) destinés à projeter un courant d'air sur le produit (P) qui tombe sur l'unité de nettoyage (18), de manière à séparer la balle légère du grain;

caractérisée en ce que la moissonneuse-batteuse comprend en outre:

— un rouleau accélérateur transversal (16) destiné à accélérer la chute du flux du produit réparti transversalement, qui arrive de l'extrémité de sortie de ces moyens transporteurs (10), où ce rouleau accélérateur (16) est placé immédiatement contigu à l'extrémité d'évacuation des moyens transporteurs (10) sans interposition de moyens quelconques destinés à répartir encore mieux le produit sur la largeur de la machine; et

— une paroi fixe (17) proche au rouleau accélérateur (16) et définissant avec celui-ci un passage dans lequel le grain sortant des moyens transporteurs (10) est accéléré, cette paroi fixe étant appropriée pour incliner la chute du produit (P) accéléré par le rouleau accélérateur (16) par rapport à un plan vertical transversal.

2. Moissonneuse-batteuse selon la revendication 1, caractérisée en ce que cette paroi fixe (17) entoure la partie arrière (considérée par rapport au sens de la marche de la moissonneuse-batteuse) du rouleau accélérateur (16) de manière à incliner vers l'avant la chute du produit (P) accéléré.

3. Moissonneuse-batteuse selon la revendication 1, caractérisée en ce que ces moyens transporteurs comprennent une surface plane située au-dessous de l'unité batteuse (6) et s'étendant au-delà de cette dernière vers l'arrière de la moissonneuse-batteuse, et une série de transporteurs à vis (10) placés immédiatement au-dessus de la surface plane et qui s'étendent parallèlement à un plan longitudinal vertical qui traverse la moissonneuse-batteuse pour transporter le grain qui tombe sous la contreplaque de batteur (8) vers une ouverture de déchargement (11) située au-dessus du rouleau accélérateur (16).

4. Moissonneuse-batteuse selon la revendication 3, caractérisée en ce qu'elle comprend un ensemble de tamis secoueurs (12) placés à une certaine distance au-dessus de cette surface plane (9) et agencés pour recevoir la paille qui sort de l'unité batteuse (6) et pour la transporter vers une extrémité d'évacuation (13) de l'ensemble de tamis secoueurs (12), et en ce que la moissonneuse-batteuse comprend en outre une surface plane additionnelle (14) disposée dans le prolongement de cette surface plane (9), au-delà de l'ouverture de déchargement (11), et une série de transporteurs à vis (15) situés au-dessus de la surface plane additionnelle (14) et destinés à transporter le grain qui tombe sur la surface plane additionnelle (14) de l'ensemble de tamis secoueurs (12) à l'ouverture de déchargement (11) précitée.

EP 0 186 630 B1